Europäisches Patentamt

European Patent Office

Office européen des brevets

(19)

(11) Numéro de publication : **0 101 375**
**B1**

(12) # FASCICULE DE BREVET EUROPÉEN

(45) Date de publication du fascicule du brevet :
26.03.86

(21) Numéro de dépôt : 83401627.1

(22) Date de dépôt : 08.08.83

(51) Int. Cl.⁴ : **G 01 B 11/30**

(54) **Procédé et dispositif de détermination sans contact de la rugosité d'une surface.**

(30) Priorité : 13.08.82 FR 8214082

(43) Date de publication de la demande :
22.02.84 Bulletin 84/08

(45) Mention de la délivrance du brevet :
26.03.86 Bulletin 86/13

(84) Etats contractants désignés :
CH DE GB IT LI

(56) Documents cités :
CH-A- 575 592
DE-A- 1 103 622
FR-A- 2 208 107
US-A- 3 591 291

(73) Titulaire : **COMMISSARIAT A L'ENERGIE ATOMIQUE
Etablissement de Caractère Scientifique Technique
et Industriel
31/33, rue de la Fédération
F-75015 Paris (FR)**

(72) Inventeur : **Laget, Jean Paul
5, rue Bel Oiseau
F-28210 Villemeux sur Eure (FR)**
Inventeur : **Marhic, Jean Yves
6, rue des Roux
F-94240 L'Hay les Roses (FR)**
Inventeur : **Riviere, Michel
4, rue Claude d'Orléans
F-71450 Blanzy (FR)**

(74) Mandataire : **Mongrédien, André et al
c/o BREVATOME 25, rue de Ponthieu
F-75008 Paris (FR)**

## Description

La présente invention a trait à la détermination de l'état de rugosité d'une surface, notamment d'une surface obtenue par usinage à l'aide d'une machine outil ou fondue dans un moule lui-même usiné par une machine outil.

D'une façon générale, on rappellera que l'état géométrique d'une surface est représenté d'une façon classique par les différents défauts qu'elle présente par rapport à sa forme géométrique idéale, ces défauts étant classés en fonction d'une part de leur amplitude et d'autre part de leur périodicité ou de leur apériodicité.

De façon classique également, on distingue des écarts du premier ordre, ou écarts de forme, qui sont dus généralement aux défauts des machines outils ou de la pièce à usiner et qui se traduisent par des déformations qui intéressent la forme d'ensemble de cette pièce (défaut de circularité, de planéité etc.) Ces écarts affectent la forme macroscopique de la pièce et l'on peut illustrer clairement de quoi il s'agit dans le cas par exemple d'une pièce de forme théoriquement cylindrique qui serait obtenue sous une forme légèrement conique ou d'une pièce théoriquement sphérique qui serait réalisée finalement avec une forme se rapprochant de l'ellipsoïde. On distingue ensuite les écarts du deuxième ordre, ou écarts d'ondulation, à caractère souvent périodique, qui sont dus en particulier aux vibrations de l'outil ou de la pièce à usiner et possédant ainsi une fréquence spatiale ou un pas constant. Enfin, il existe encore les écarts du troisième ordre, ou écarts de rugosité, constitués de toutes petites ondulations autour du profil du deuxième ordre et qui sont dus en général à la forme de l'arrête coupante de l'outil de la machine de taille, à son orientation et à son avance, donc finalement au procédé d'usinage lui-même. Ceci procure à ces ondulations du troisième ordre, selon les cas, une ondulation nettement périodique ou au contraire apériodique. Ce sont ces écarts du troisième ordre qui constituent ce que l'on appelle la rugosité de la surface d'une pièce usinée.

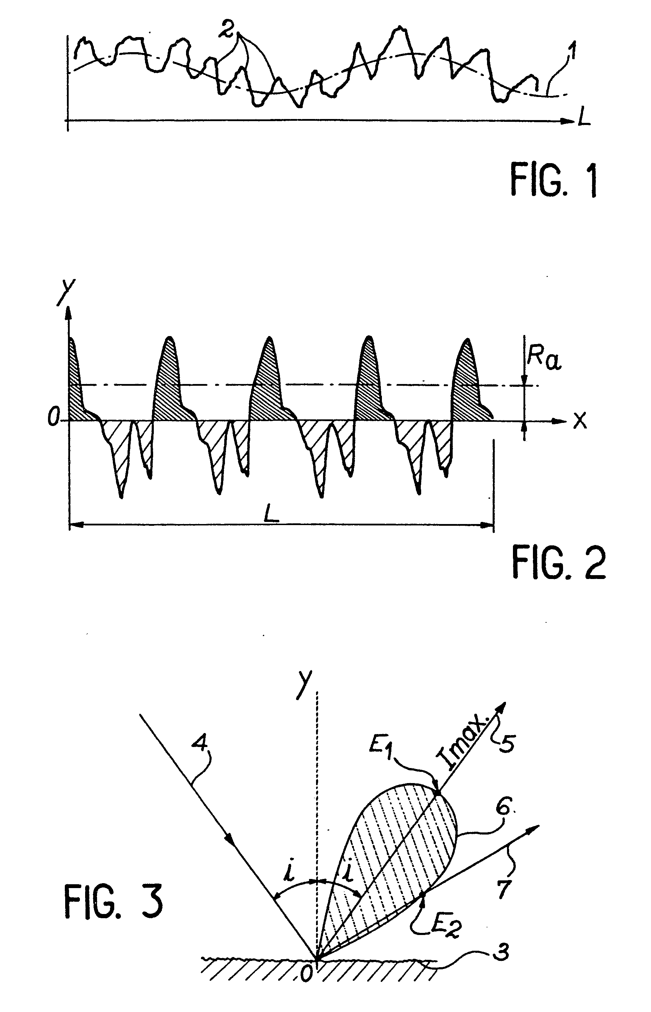

La figure 1 rassemble sur un schéma les différentes considérations précédentes et permettent de repérer, dans une direction L en abscisses qui correspond à la longueur de la pièce explorée, des ondulations du deuxième ordre 1 sur lesquelles des écarts de rugosité du troisième ordre 2 viennent se superposer. Dans l'exemple de la figure 1, la direction générale du profil initialement souhaité est celui de la direction des abscisses étant entendu que les défauts illustrés ont été agrandis exagérément pour une meilleure compréhension du dessin.

Il existe, dans l'art connu, un certain nombre d'instruments de mesure des écarts précédents qui travaillent généralement en étudiant une ligne de niveau suivant un profil de la pièce usinée. Différents critères physiques et statistiques sont utilisables pour mesurer la rugosité, mais néanmoins dans la suite du présent texte, on utilisera le critère le plus courant qui est l'écart moyen par rapport à la ligne moyenne de la rugosité, traditionnellement désigné dans la littérature par le coefficient $R_a$ que l'on définit de la façon suivante en se reportant à la figure 2, qui montre de façon schématique, en coordonnées cartésiennes Oxy, un profil de pièce usinée possédant une rugosité périodique dans la direction ox. Si l'on considère qu'en fonction de l'abscisse x représentant la coordonnée spatiale, le profil de la pièce rugueuse peut se définir par une fonction y (x), on définit le coefficient de rugosité de la surface comme étant :

$$Ra = \frac{1}{L} \int_0^L |y| \, dx .$$

C'est, si l'on veut, la valeur moyenne de la fonction y dans l'espace OL.

Dans l'art antérieur connu, différents capteurs mécaniques équipés de stylets à pointes de diamant ont été utilisés pour déterminer les profils de surfaces à étudier. Des systèmes relativement complexes de filtrage intermédiaire permettent de s'affranchir des défauts correspondant aux deux premiers ordres précédemment rappelés et de mesurer par conséquent uniquement les défauts de rugosité. Le palpage mécanique est réalisé par déplacement d'un stylet de diamètre donné à une vitesse constante le long d'une ligne d'exploration, en général une ligne de profil de la surface. Malheureusement, le stylet qui vient nécessairement en contact avec la pièce à mesurer, laisse une trace sur la surface et cette trace peut être très gênante lorsque l'on travaille sur des surfaces de grande qualité. D'autre part une telle méthode ne permet pas d'atteindre avec précision des valeurs de rugosité $R_a$ inférieures par exemple à 0,1 micromètre.

Pour pallier cet inconvénient, une méthode optique sans contact, utilisant un laser, a déjà été employée et on en trouvera la description dans le document américain suivant :

H.S. Corey

« Laser Surface Finish Gauge »

Preprint for Submission to Society of Photo Optical Instrumentation Engineers Annual International Technical Symposium Exhibit.

San Diego, California, July 28 - August 1, 1980.

Pour comprendre cette méthode connue, on se réfèrera utilement maintenant au schéma explicatif de la figure 3 sur laquelle le profil de surface 3 à explorer est irradié en un point 0 par la lumière d'un faisceau laser 4. Sur une surface usinée possédant des défauts périodiques telle que la surface 3, le faisceau laser 4 subit une réflexion diffractée dans la direction 5 faisant avec la normale 0Y un angle i égal à l'angle d'incidence i du faisceau 4 et correspondant à ce que serait la réflexion spéculaire sur un miroir parfaitement lisse. En fait, l'ensemble de la lumière réfléchie s'inscrit dans une tâche de diffraction dont le profil des intensités en fonction de la direction de réflexion est représentée par le profil 6 sur la figure 3. Cette tache de diffraction a, de façon connue, une direction privilégiée dans un sens perpendiculaire à la direction privilégiée des imperfections de l'usinage de la surface 3.

Si l'on examine maintenant la valeur des différents éclairements E recueillis dans cette tache de diffraction 6, on constate que l'éclairement maximal $E_1$ a lieu selon le faisceau 5 dans la direction de la réflexion de Descartes. Dans une autre direction 7, faisant par exemple un angle de plusieurs degrés avec la direction 5, la valeur de l'éclairement est plus faible et n'a plus que la valeur $E_2$. La théorie et l'expérience montrent qu'une surface imparfaite comme la surface 3 diffuse la lumière réfléchie en élargissant la distribution énergétique dans la tache de diffraction 6 d'autant plus que l'état de surface, caractérisé par l'écart moyen arithmétique de la rugosité $R_a$, par rapport à la ligne moyenne, est moins bon.

Comme il est expliqué dans l'article américain précédemment cité, on a constaté qu'il était possible de mesurer avec précision la rugosité $R_a$ d'une surface telle que 3 en établissant le rapport des intensités d'éclairement $E_1/E_2$ et en se référant à une courbe de calibration de ce même rapport $E_1/E_2$ préalablement étalonnée à l'aide de surfaces présentant des défauts d'ampleur connue. En effet, en prenant ainsi le rapport entre l'éclairement $E_1$ mesuré au centre de la figure de diffraction et l'éclairement $E_2$ mesuré dans un lobe secondaire et dans une direction que l'on maintient constante tout au long des mesures, on parvient à éliminer les variations de signal qui seraient dues autrement au changement de pouvoir de réflexion d'un échantillon à l'autre ainsi qu'aux fluctuations toujours possibles de l'intensité du faisceau laser dans le temps. De plus, le fait de mesurer l'intensité de l'éclairement $E_2$ dans une direction faisant un angle constant avec la direction d'intensité maximale correspondant à la réflexion spéculaire de la loi de Descartes, élimine les variations du pouvoir de réflexion de la surface en fonction de l'angle d'incidence.

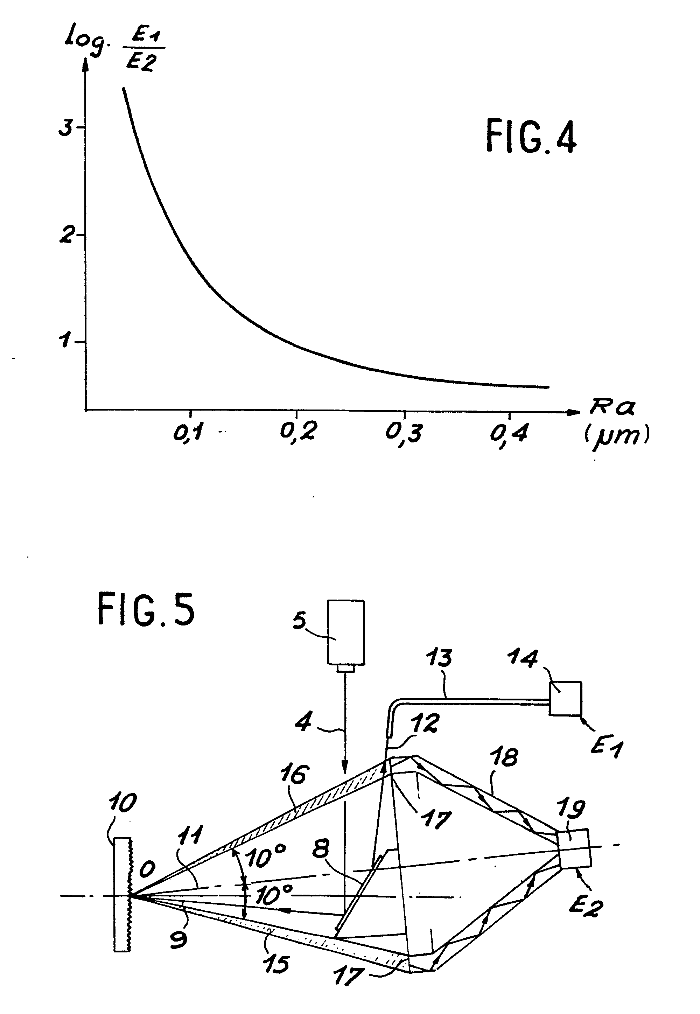

A titre d'exemple on a représenté sur la figure 4 le profil classique d'une courbe de calibration correspondant à une surface convexe qui montre, en fonction du cœfficient de rugosité $R_a$ exprimé en micromètres selon les abscisses, la fonction log $E_1/E_2$ en ordonnées. C'est par comparaison avec une courbe de cette nature qu'après avoir mesuré le rapport $E_1/E_2$ on peut en déduire la valeur précise du cœfficient de rugosité $R_a$. Toutefois, ces méthodes connues présentent une difficulté sérieuse du fait que l'on travaille sur des éclairements qui sont mesurés en deux points, d'une part pour $E_1$ au centre de la tache de diffraction et d'autre part pour $E_2$ dans un lobe annexe et situé angulairement à une certaine distance de l'axe de réflexion spéculaire. Il est à la fois peu commode et peu précis de faire la mesure de l'éclairement $E_2$ lorsque celle-ci intervient à partir d'un prélèvement de lumière ponctuel sur un lobe secondaire.

La présente invention a précisément pour objet un procédé de détermination sans contact, à l'aide d'un faisceau laser, utilisant le même principe que celui qui vient d'être rappelé, mais permettant de remplacer la mesure ponctuelle de l'éclairement $E_2$ par une mesure intégrée sur toute une surface, qui rend la méthode beaucoup plus précise et performante.

Ce procédé de détermination sans contact de la rugosité d'une surface, du genre de ceux qui comportent de façon connue, l'irradiation de cette surface à l'aide d'un faisceau de lumière laser, la détermination des éclairements $E_1$ de la partie de la lumière ayant subi la réflexion spéculaire, et $E_2$ de la partie de la lumière ayant subi la réflexion diffractée, l'établissement du rapport $E_1/E_2$ et la détermination de la rugosité Ra de la surface par comparaison avec une courbe de calibration étalonnée, se caractérise essentiellement en ce que la mesure de l'éclairement diffracté $E_2$ est réalisée par intégration de la lumière reçue sur une couronne annulaire centrée sur la direction de réflexion spéculaire, et guidage de celle-ci dans un guide de forme conique annulaire ayant pour base ladite couronne annulaire et pour axe la direction de réflexion spéculaire.

Comme on le voit, l'originalité essentielle du procédé objet de la présente invention consiste à recueillir l'ensemble de l'éclairement diffracté $E_2$ sur une surface en forme de couronne annulaire constituant la base d'un cône de guidage de la lumière qui conduit celle-ci directement à son sommet vers le détecteur chargé de mesurer l'éclairement $E_2$. On remplace ainsi la mesure d'un éclairement ponctuel relevé dans une direction d'espace déterminée, par la mesure intégrée de l'éclairement de tous les points d'une surface située dans une portion d'angle solide donnée, centrée sur la normale à la surface. Le reste de la méthode est strictement conforme au procédé de l'art antérieur précédemment rappelé.

La présente invention a également pour objet un dispositif pour la mise en œuvre du procédé précédent, caractérisé en ce qu'il comprend un miroir plan permettant de diriger sur la surface à examiner le faisceau d'un laser et de recueillir le faisceau réfléchi pour l'adresser vers un premier détecteur mesurant l'éclairement $E_1$ et un guide de lumière, en un matériau transparent pour cette lumière, et en forme de cône, ayant pour section droite une couronne annulaire, dirigeant la lumière vers son sommet où se trouve situé un deuxième détecteur mesurant l'éclairement $E_2$.

Le cône de lumière servant de guide à cette dernière est conçu de façon telle, quant à son épaisseur et à son indice de réfraction, que tout rayon lumineux pénétrant sur la couronne annulaire constituant sa base, est piégé par réflexion totale sur ses parois interne et externe pour être finalement conduit vers le deuxième détecteur chargé de mesurer l'éclairement intégré $E_2$. Ce cône peut être fabriqué en tout matériau transparent au rayonnement laser utilisé et on peut citer par exemple, à titre non limitatif, le verre ou le plexiglas (polyméthylmétacrylate). Le miroir chargé de diriger le rayon laser entrant et de recueillir le rayon laser sortant après l'incidence sur la surface de l'échantillon à étudier peut être par exemple un simple miroir à 45° fixé sur la base non utilisée optiquement dudit cône de lumière. Un système de fibres optiques peut également être utilisé pour guider le faisceau laser correspondant à l'intensité maximale et donc à l'éclairement $E_1$ vers le premier détecteur de lumière.

De toute façon l'invention sera mieux comprise en se référant à la description qui suit d'un exemple de mise en œuvre, description qui sera faite à titre illustratif et non limitatif en se référant à la figure 5 ci-jointe.

Dans cet exemple particulier décrit, on s'attache à étudier des échantillons dont les coefficients de rugosité $R_a$ sont compris entre 0,02 micromètre et 0,5 micromètre en utilisant comme lumière incidente le faisceau lumineux 4 d'un laser 5 à hélium néon de 5 mW émettant sur une longueur d'onde $\lambda$ = 0,6328 micromètre. Ce faisceau 4 vient frapper d'abord le miroir plan 8 sur lequel il se réfléchit selon le faisceau 9 pour frapper au point 0 la surface rugueuse de l'échantillon 10 à étudier. Le dispositif de la figure 4 est réglé de façon telle que le faisceau 9 vienne frapper la surface de l'échantillon 10 sous une incidence voisine de la normale. La réflexion spéculaire, qui est localisée dans l'espace par la loi de Descartes, se concrétise par le faisceau 11 lequel, après réflexion à son tour sur le miroir 8 donne le faisceau 12 qui, repris par une fibre optique 13 parvient alors au premier détecteur 14 de l'éclairement $E_1$ à mesurer. Pour mesurer la composante diffractée de la réflexion sur l'échantillon 10, on se situe par exemple dans une direction située à 10° de l'axe de réflexion spéculaire, c'est-à-dire que l'on utilise la portion de lumière réfractée contenue dans une nappe conique schématisée en coupe par les deux faisceaux hachurés 15 et 16.

Conformément à l'invention, cette nappe de lumière conique est prise en charge par la couronne annulaire 17 constituant la base du guide conique de lumière 18 qui conduit cette lumière vers le second détecteur 19 situé au sommet du cône 18 et chargé d'apprécier la valeur intégrée de l'éclairement $E_2$ pour tout le rayonnement lumineux reçu sur la base annulaire 17 de ce cône. Etant donné le caractère inhomogène de la figure de diffraction, une telle mesure, effectuée par intégration sur toute une couronne à l'aide du cône 18, est beaucoup mieux adaptée à fournir une mesure précise qu'une exploration faite, comme c'était le cas dans l'art antérieur, sur un point de la tache de diffraction.

Comme dans l'art-antérieur, on établit ensuite le rapport des éclairements $E_1/E_2$ et, par comparaison avec une courbe de calibration du genre de celle de la figure 3 préalablement établie en fonction du paramètre $R_a$, on déduit alors la rugosité de l'échantillon 10 attestée par simple comparaison avec la courbe de calibration.

La méthode objet de l'invention permet, par mesure des réflexions spéculaire et diffractée d'un faisceau laser par la surface de l'échantillon à étudier, de caractériser avec précision le coefficient de rugosité $R_a$ de cette surface dans un domaine compris entre 0,02 et 0,4 micromètre, ce que ne permettait pas la méthode de l'art antérieur.

Elle permet facilement le contrôle de fabrication de toute pièce usinée de forme géométrique bien définie, telle que par exemple l'examen de l'état de surfaces concaves, telles que des cuves, ou planes, telles que des tôles sortant d'un laminoir.

**Revendications**

1. Procédé de détermination sans contact de la rugosité d'une surface (10) du genre de ceux qui comportent, de façon connue, l'irradiation de cette surface (10) à l'aide d'un faisceau (4) de lumière laser (5), la détermination des éclairements $E_1$ de la partie de la lumière (9, 11) ayant subi la réflexion spéculaire sur cette surface (10), et $E_2$ de la partie de la lumière (15, 16) ayant subi la réflexion diffractée sur cette même surface (10), l'établissement du rapport $E_1/E_2$ et la détermination de la rugosité Ra de la surface (10) par comparaison avec une courbe de calibration étalonnée, caractérisée en ce que la mesure de l'éclairement diffracté $E_2$ est réalisée par intégration de la lumière reçue sur une couronne annulaire (17) centrée sur la direction de réflexion spéculaire, et guidage de celle-ci dans un guide (18) de forme conique annulaire ayant pour base ladite couronne annulaire (17) et pour axe ladite direction.

2. Dispositif pour la mise en œuvre du procédé selon la revendication 1, caractérisé en ce qu'il comprend un miroir plan (8) permettant de diriger sur la surface à examiner (10) le faisceau d'un laser (5) et de recueillir le faisceau réfléchi (12) par ladite surface (10) pour l'adresser vers un premier détecteur (14) mesurant l'éclairement $E_1$ et un guide de lumière (18) en forme de cône, et fabriqué en un matériau transparent pour cette lumière, ledit cône ayant pour section droite une couronne annulaire (17), dirigeant la lumière réfractée (15, 16) vers son sommet où se trouve situé un deuxième détecteur (19) mesurant l'éclairement $E_2$.

**Claims**

1. Process for the determination of the roughness of a surface (10) without making contact therewith, of the type which comprises, in known manner, irradiation of said surface (10) by means of a beam (4) of laser light (5), determination of the illuminances $E_1$ of that part of the light (9, 11) that undergoes a specular reflection on said surface (10), and $E_2$ of that part of the light (15, 16) that undergoes diffracted reflection by the same surface (10), determination of the ratio $E_1/E_2$, and determination of the roughness Ra of the surface (10) by comparison with a standard calibration curve, characterized in that the diffracted illuminance $E_2$ is measured by integration of the light received over an annular ring (17) centred on the direction of specular reflection, and guided by a light guide (18) in the form of an annular cone whose base is said annular ring (17) and whose axis is said direction.

2. Apparatus for carrying out the process according to claim 1, characterized in that it comprises a plane mirror (8) enabling a laser beam (5) to be directed on the surface to be examined (10) and receiving the reflected beam (12) from said surface (10), for direction towards a first detector (14) measuring illuminance $E_1$, and a light guide (18) in conical form, and formed from a material transparent to said light, said cone having, in cross section, the form of an annular ring (17), and directing the refracted light (15, 16) towards its apex, at which is located a second detector (19) measuring illuminance $E_2$.

### Patentansprüche

1. Verfahren zur kontaktlosen Bestimmung der Rauheit einer Oberfläche (10) von der Art, welche in bekannter Weise umfaßt die Bestrahlung dieser Oberfläche (10) mittels eines Bündels (4) von Laserlicht (5), die Bestimmung der Beleuchtungsstärke $E_1$ des Anteils des Lichtes (9, 11), welches eine spiegelartige Reflexion an dieser Oberfläche (10) erfahren hat, und der Beleuchtungsstärke $E_2$ des Anteils des Lichtes (15, 16), welches eine Beugungsreflexion an dieser gleichen Oberfläche (10) erfahren hat, Feststellen des Verhältnisses $E_1/E_2$ und Bestimmung der Rauheit Ra der Oberfläche (10) durch Vergleich mit einer geeichten Kalibrierungsmessung der Beugungsstreuung, dadurch gekennzeichnet, daß die Messung der gebeugten Beleuchtungsstärke $E_2$ durch Integration des auf einem ringförmigen, zu der Richtung der spiegelartigen Reflexion zentrierten Ring (17) empfangenen Lichtes und durch Führung desselben in einem Leiter (18) von konischer, ringförmiger Form durchgeführt wird, dessen Basis der ringförmige Ring (17) und dessen Achse die genannte Richtung ist.

2. Vorrichtung zur Durchführung des Verfahrens nach Anspruch 1, dadurch gekennzeichnet, daß es einen Planspiegel (8) mit dem das Bündel eines Lasers (5) auf die zu untersuchende Oberfläche (10) lenkbar und das von dieser Oberfläche (10) reflektierte Bündel (12) erfaßbar ist, um es zu einem ersten Detektor (14) zu führen, der die Beleuchtungsstärke $E_1$ mißt, und einen Lichtleiter (18) in der Form eines Konus aufweist, der aus einem für dieses Licht durchlässigen Material hergestellt ist und als Querschnitt einen ringförmigen Ring (17) aufweist und das gebeugte Licht (15, 16) zu seiner Spitze lenkt, wo sich ein zweiter, die Beleuchtungsstärke $E_2$ messender Detektor (19) befindet.

FIG. 1

FIG. 2

FIG. 3

# FIG.4

# FIG.5